# EUROPEAN PATENT APPLICATION

(11) **EP 1 073 025 A2**
(43) Date of publication of application: **31.01.2001**
(21) Application number: 00306391.4
(22) Date of filing: 27.07.2000
(51) Int. Cl.: G07F 19/00

(54) **System, method and computer program product for smart card to smart card transactions**

(30) Priority: 27.07.1999 US 360961
(71) Applicant: Nortel Networks Corporation, Montreal, Quebec H2Y 3Y4 (CA)
(72) Inventor: Lowery, Ted B., Wake Forest, NC 27587 (US); Crabtree, Walden, Raleigh, NC 27614 (US)
(74) Representative: Ertl, Nicholas Justin

(57) **Abstract**

A smart card terminal **(910, 920, 930, 940)** receives a first smart card and deducts value from the smart card. The value to be deducted is determined by a smart card holder and is relayed to a smart card terminal **(910, 920, 930, 940)** via a user interface on the smart card terminal. If a single slot smart card terminal is utilized for a transfer between smart cards, then the terminal deducts the value from the first smart card that is then removed from the slot. The transaction is completed when a second smart card is inserted into the slot and the value deducted from the first card is written onto the second card. If a multiple slot smart card terminal is utilized then the first smart card is inserted into a first slot and the second smart card is inserted into a second slot. A user interface guides the smart card holder(s) through the process of deducting value from the first smart card and writing it onto the second smart card. Long distance or remote transfers of value between smart cards can also be performed. A remote transfer implies two smart card terminals communicating with one another. Such communication can be telephone based or computer based and can utilize telephone networks **950** or computer data networks **960**. Smart card transfers can also be effected in a non-real-time basis meaning a first smart card can have value deducted and stored in a data network smart card server **970** for later retrieval by a second smart card.

## Description

The present invention relates to smart cards in general. More specifically, the present invention relates to techniques for transferring value from one smart card to another smart card.

Smart cards are wallet-sized cards on which currency or other forms of value are stored electronically on the smart card itself. Smart cards are used in place of hard currency, credit cards, and the like in a retail environment or at terminals with smart card readers. Thus, smart cards are intended as a replacement medium for small value purchases and transactions.

Typically, smart cards are provisioned or encoded with value from an account source. Once the value has been depleted or spent the smart card is disposed of. Some more advanced smart cards can be re-loaded with value once they have been depleted. Re-loadable smart cards need not be disposed of when their value has been depleted. Instead the smart card holder can re-provision the smart card with value from an account source. The re-provisioning of a smart card is the subject of a commonly owned related pending application, U.S. Serial No. 09/262,578, filed March 4, 1999 and entitled *"System and Method for Provisioning and Loading smart cards".*

What has yet to be addressed, however, is a means by which value can be transferred directly from one smart card to another smart card. There are many instances in which this would be desirable. For example, parents could dole out electronic cash to their children right from their own smart card. Friends can lend money to one another without having to involve a third party such as a bank. Moreover, transfers between smart cards are not necessarily network dependent. Thus, if a bank network is down and money cannot be withdrawn, a smart card holder could still transfer value from one smart card to another. This is possible since a smart card terminal that processes the exchange between smart cards can be entirely self-contained meaning the deduction of value from one smart card and the writing or adding of value to another smart card can be performed at a single smart card terminal.

According to a first aspect of the invention, there is provided a smart card terminal for transferring value between smart cards comprising:
a smart card reader for establishing an operable connection between a smart card and the smart card terminal; and
processing means for deducting value from and adding value to a smart card, wherein
a first smart card is input into said smart card reader and a value is deducted from said first smart card, followed by a second smart card inserted into said smart card reader and the value deducted from said first smart card is added to said second smart card.

The invention enables a smart card transaction system to be implemented. The smart card terminal can read, store, and transmit (for certain transactions) information relating to one or more smart cards, and a user interface is preferably associated with the smart card terminal which displays information and instructions to the smart card holder enabling the smart card holder to input information. If more than one smart card terminal is used for a transfer of value between smart cards, then there is likely a network connection between the smart card terminals.

A smart card terminal can take a variety of forms including, but not limited to, a smart card terminal kiosk that accepts one or more smart cards, a personal computer (PC) peripheral device designed to receive a smart card that utilizes other PC peripherals to display information and instructions as well as communicate over a network, a telephone adjunct device that utilizes a telephone to communicate over a network, or a smart telephone having an integrated smart card terminal.

Whatever the form, a smart card terminal essentially receives a first smart card and deducts value from the card. The value to be deducted is determined by the user and is relayed to the smart card terminal via a user interface on the smart card terminal. The smart card terminal then either writes the value deducted from the first smart card onto a second smart card and the transaction is complete. Or, the smart card terminal transmits the value to a second smart card terminal or to a smart card server in a data network.

If the smart card terminal is a self-contained unit the entire transaction can be performed at the smart card terminal. There are at least two types of self-contained smart card terminals, those with a single smart card receiving slot, and those with multiple smart card receiving slots.

If a single slot smart card terminal is utilized for a transfer between smart cards, then the terminal receives and deducts value from a first smart card which is then removed from the slot. The transaction is completed when a second smart card is inserted into the slot and the value deducted from the first card is written onto the second card.

If a multiple slot smart card terminal is utilized then a first smart card is inserted into a first slot and a second smart card is inserted into a second slot. A user interface guides the smart card holder(s) through the process of deducting value from one smart card and writing it onto the other smart card. To make the process more intuitive, the slots on the smart card terminal can be designated as read only and write only. Read only slots would be for deducting value from a smart card while write only slots would be for accepting value onto a smart card.

Long distance or remote transfers of value between cm smart cards can also be performed. This type of transfer implies two smart card terminals communicating over a network. Such terminals can be telephone based or computer based and can utilize telephone networks like the PSTN, computer networks like the Internet, or both.

Smart card transfers can also be effected in a non-real-time basis meaning a smart card can have value deducted and stored in a data network for later retrieval by a second smart card. The deducted value can be designated for a specific person or a specific smart card.

Expiration dates can be associated with delayed transfers. For instance, a first smart card holder can leave value for a second smart card holder with a stipulation that the value be retrieved by a certain date or time. If the second smart card holder has not retrieved the value before the expiration date then the value can be returned to the first smart card holder.

Computer processing means is preferably included in the smart card terminal in order to validate a smart card and encrypt data among other functions. The smart card terminal may also include input means for allowing a smart card holder to key in data including the value to be transferred between smart cards. The input means can be an alpha/numeric keypad or a touchscreen. A screen display may also be included with the smart card terminal in order to display data pertaining to a smart card transaction. Moreover, the smart card terminal may also possess communication means for establishing a connection with other smart card terminals for the purpose of performing value transfers between smart cards in which each smart card is located at a different smart card terminal.

In accordance with a second aspect of the present invention there is provided a smart card server connected to a network of smart card terminals for managing smart card to smart card value transactions. The server includes means for receiving a name associated with a smart card upon a smart card being inserted into a smart card terminal on the network, means for receiving a network address associated with a smart card terminal upon a smart card being inserted into a smart card terminal, and database means for maintaining a look up table linking smart card names and smart card terminal network addresses of all active smart cards. An active smart card is one that is currently in use at a smart card terminal on the network. Also included on the server are means for establishing and maintaining a virtual account associated with a smart card name.

A first smart card is inserted into a smart card terminal and value is attempted to be transferred to a second smart card by identifying the name associated with the second smart. The smart card server looks up the name associated with the second smart card via the data look up table in order to determine if the second smart card is active on the network. If the second smart card is currently active on the network, the smart card server transfers the value to the network address of the smart card terminal. If the second smart card is not currently active on the network, the smart card server places the value into a virtual account in the name associated with the second smart card. The smart card server notifies the second smart card of its virtual account value the next time the second smart card goes active on the network. The smart card server can reclaim the value in a virtual account associated with the name of the second smart card if it has not yet been claimed by the second smart card.

The invention also provides methods of transferring value between smart cards as well as computer program products for implementing these methods. The invention also provides a combination telephone and smart card terminal.

Examples of the invention will now be described in detail with reference to the accompanying drawings in which:

**FIGURE 1** illustrates a typical smart card.

**FIGURE 2** is a flowchart illustrating a smart card to smart card value transfer process using a single smart card terminal having a single smart card slot.

**FIGURE 3** is a flowchart illustrating a smart card to smart card value transfer process using a single smart card terminal having multiple smart card slots.

**FIGURE 4** is a flowchart illustrating a smart card to smart card value transfer process using two smart card terminals.

**FIGURE 5** illustrates one embodiment of a smart card terminal according to the present invention.

**FIGURE 6** illustrates another embodiment of a smart card terminal according to the present invention.

**FIGURE 7** illustrates yet another embodiment of a smart card terminal according to the present invention.

**FIGURE 8** illustrates still another embodiment of a smart card terminal according to the present invention.

**FIGURE 9** is a diagram illustrating one potential network architecture according to the present invention.

**FIGURE 10** is a flowchart illustrating yet another embodiment of the present invention that would employ the architecture of **FIGURE 9**.

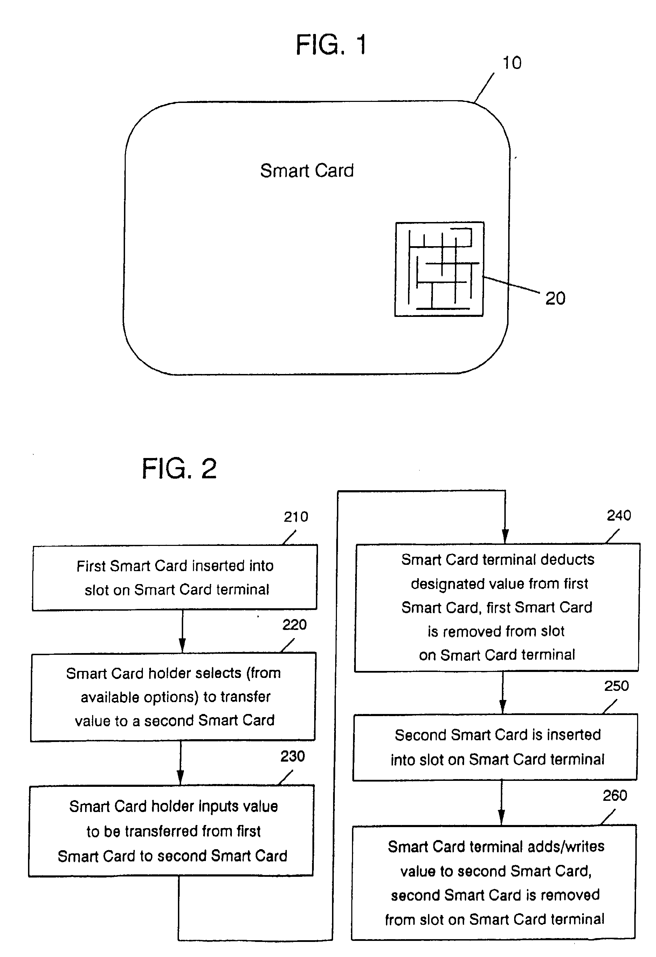

Smart cards are wallet-sized cards on which money, other forms of value, or information are stored electronically on the card itself. The value is to be used in place of hard currency. **FIGURE 1** is an illustration of a typical smart card. The card itself **10** is similar to a standard credit or debit card in size, shape, and construction, e.g. plastic. However, rather than having a magnetic stripe or a bar code on one side of the card, the smart card possesses embedded circuitry **20** complete with processing logic and limited memory storage capability. The smart card operates upon insertion into a terminal device (not shown). When the smart card's circuitry directly contacts similar circuitry housed within the terminal device a circuit is completed and transaction processing can take place. Alternatively, card-to-terminal contact may be made in a "wireless" fashion utilizing Infrared (IR) or Radio Frequency (RF) techniques that are well known in the art.

In terms of security, the information stored on a smart card tends to be far less vulnerable to tampering and fraud than information stored on a magnetic stripe card. Surreptitiously reading information from a magnetic stripe card is easier than reading information off a smart card chip. Also, when account information is transmitted over a network, it is often carried over a non-secure connection and is therefore vulnerable to line tapping or electronic eavesdropping. Smart cards can and have been developed to include encryption mechanisms in which cryptography is employed to encode and decode data transmitted to and from the smart card, thus making the information transmitted significantly less vulnerable to line tapping or electronic eavesdropping. Current encryption processes used in smart cards include, but are not limited to, symmetric encryption, private key encryption such as the Data Encryption Standard (DES), asymmetric encryption, and public key encryption such as the RSA algorithm.

In general, the problem addressed by the present invention is the transfer of value from one smart card to another smart card. Value includes, but is not limited to, electronic cash, as well as other forms of information, or tokens that can be redeemed or used in transactions at a later time by the smart card owner.

**FIGURE 2** is a flowchart illustrating a smart card to smart card value transfer process using a single smart card terminal having a single smart card slot. The transfer can be made between commonly held smart cards or between smart cards of different holders. The first smart card or the donating smart card is inserted **210** into a smart card slot on a smart card terminal. When the smart card's embedded circuitry contacts the smart card terminal's embedded circuitry a connection is made and a display on the smart card terminal displays identification information and a list of options or transactions the holder can perform at the smart card terminal. If desired, an additional security step such as inputting a passcode, or biometric identification (e.g., fingerprint, speech recognition, retinal print) can be required to ensure that the true holder of the smart card will be performing any transactions.

The smart card holder then selects **220** from the available options the option to transfer value to another smart card. The smart card terminal then prompts the holder to input the amount to be transferred. The holder keys in the desired value **230** via a user interface that is most likely a standard numeric keypad. Additional function keys may also be included to assist the holder in conducting smart card transactions. The smart card terminal deducts **240** the designated value from the donating smart card and the donating smart card is removed from the smart card terminal slot.

At this point the second or receiving smart card is inserted **250** into the smart card terminal slot. Upon establishment of a connection between the receiving smart card and the smart card terminal, the smart card terminal adds or writes **260** the previously deducted value onto the second smart card. If desired, additional security measures can be taken after the receiving smart card has been inserted into the slot but before the smart card terminal writes value onto the second smart card. The security measures could include inputting a one-time passcode assigned to the transaction.

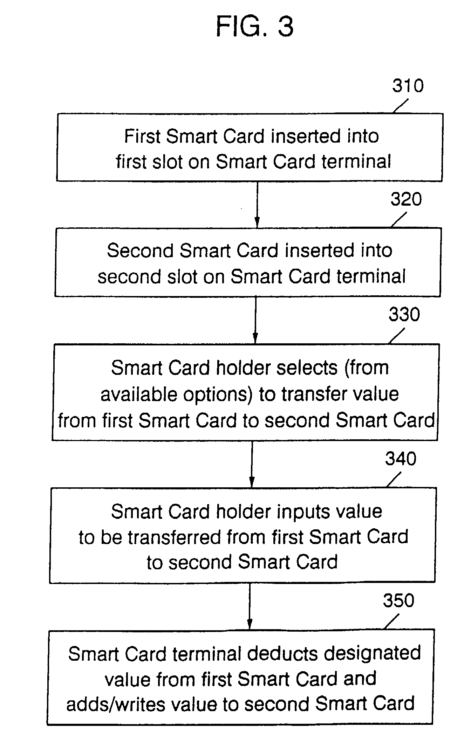

**FIGURE 3** is a flowchart illustrating a smart card to smart card value transfer process using a single smart card terminal having multiple smart card receiving slots. The process for transferring value between smart cards on a multiple slot smart card terminal is much the same as for a single slot smart card terminal. Instead of having to insert and remove the donating smart card followed by inserting the receiving smart card all into the same slot, both the donating and receiving smart cards can be inserted into separate slots simultaneously. The security measures previously described can be applied to each smart card if desired. In addition, the smart card terminal's display can provide instructions for the transaction with respect to both smart cards. Moreover, the slots can be (but need not be) designated on the smart card terminal as read and write only. A read only slot would allow deductions from smart cards while a write only slot would allow additions to smart cards. If the slots are clearly labeled, the process is simpler and more intuitive to smart card holders.

The first (donating) smart card is inserted **310** into a first slot on the smart card terminal and a second (receiving) smart card is inserted **320** into a second slot on the smart card terminal. The smart card terminal displays a list of options and the first smart card holder selects **330** the option for a value transfer to another smart card. The first smart card holder inputs **340** the desired value to be transferred and the smart card terminal deducts **350** this value from the first smart card and adds or writes it onto the second smart card.

Long distance or remote transfers of value between smart cards can be performed also. This necessitates two smart card terminals communicating with one another, typically over a network. Such terminal communication can be telephone based or computer based and can utilize telephone networks like the PSTN, computer data networks like the Internet, or both.

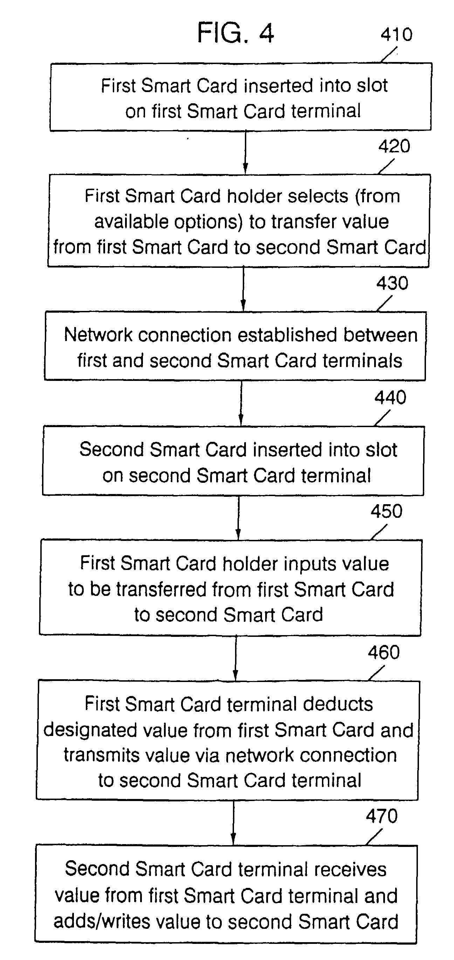

**FIGURE 4** is a flowchart illustrating a smart card to smart card value transfer process using two smart card terminals. First and second smart card holders are at two separate smart card terminals. The smart card terminals could be, but need not be, connected via a phone or data network allowing voice communication to take place during preparation and execution of the value transfer. The first smart card holder inserts **410** a first smart card into a first smart card terminal. The first smart card holder then selects **420** (from available options) to transfer value to another smart card at another smart card terminal. The first smart card holder then initiates a connection between the first and second smart card terminals **430** via a network. A connection is initiated by having the first smart card terminal query the first smart card holder for an identifying characteristic of the second smart card terminal. An identifying characteristic could be for instance, a telephone directory number, an Internet address, or other suitable network address identifying means. Once the identifying characteristic of the second smart card terminal is input, the first smart card terminal attempts to establish a direct connection to the second smart card terminal.

Upon establishment of a connection, the first smart card terminal reads identification information from the first smart card and transmits this information to the second smart card terminal which displays same to the second smart card holder. The second smart card holder then inserts **440** the second smart card into the second smart card terminal. The second smart card terminal similarly reads identification information from the second smart card and transmits this information back to the first smart card terminal which displays same to the first smart card holder. This is done to ensure that the first smart card holder is transferring value to an intended party and not just anyone who happens to be at the second smart card terminal.

The first smart card holder then inputs the amount or value **450** to be transferred to the second smart card. The first smart card terminal deducts the value **460** from the first smart card and transfers the value to the second smart card terminal over the phone or data network connection. The second smart card terminal adds/writes the value to the second smart card **470**. The smart card terminals confirm the transfer between the smart cards and the smart cards are removed from their respective smart card terminals.

The foregoing systems and methods for transferring value between smart cards use smart cards having memory and processing means. The smart cards interface with smart card terminals having input and output means as well as memory and processing means. Preferably, such a smart card terminal would have a multiple line display and keypad, but could comprise, *inter alia,* a single line display and keypad, or a speaker/microphone in combination with an Interactive Voice Response (IVR) interface. Moreover, the terminal may take the form of a personal computer (PC) peripheral device utilizing the CPU, monitor, mouse, and/or keyboard of the PC to create a full service smart card terminal. The smart card terminal may also take the form of a telephone adjunct device capable of sending and receiving data over a phone line. A smart card server is utilized to assist with certain transactions and communicate with other smart card terminals. It is to be understood that equivalents of the aforementioned devices may be substituted without departing from the spirit or scope of the present invention.

Software running on a smart card terminal's processing means or on a smart card server provides a smart card holder with information, prompts a smart card holder for input, initiates the necessary network communications, and generally guides a smart card holder through a value transfer transaction.

A Secure Applications Module (SAM) residing in a smart card terminal and/or smart card server, verifies that the smart card currently being used is valid and is communicable with the smart card terminal and smart card server.

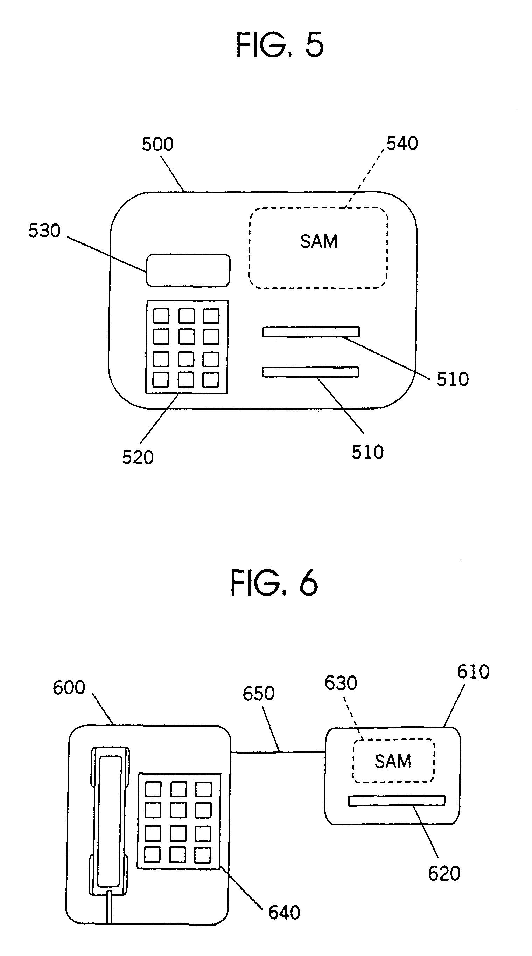

**FIGURES 5-8** illustrate various smart card terminal embodiments. Those of ordinary skill in the art can readily devise alternative designs for smart card terminals without departing from the spirit or scope of the present invention. Thus, the smart card terminals illustrated herein are not intended to limit the present invention in any way. Rather, the smart card terminals shown are used to describe different functions that can be performed by different types of smart card terminals.

**FIGURE 5** illustrates a single self-contained smart card terminal capable of performing a smart card to smart card transfer by itself. This particular smart card terminal includes two smart card receiving slots. The number of slots, however, can be altered without departing from the spirit or scope of the present invention. In fact, as earlier described, a single slot smart card terminal can be used to effect a smart card to smart card transfer of value. The smart card terminal **500** comprises one or more smart card receiving slots **510**, a keypad **520** for inputting data, and a display **530** for displaying data all under the control of processing means that are programmed with computer code. Associated with the smart card terminal's processing means is a security applications module (SAM) **540**. The purpose of SAM **540** is to verify the validity of an inserted smart card and provide security for smart card transactions. Security typically refers to data encryption techniques. SAM also ensures that smart card terminals and a smart card server communicate using a mutually compatible data protocol.

Keypad **520** and display **530** can take various forms. Specific implementations of these elements do not alter the functionality of a smart card terminal.

**FIGURE 6** illustrates a smart card terminal comprised of a telephone **600** and an adjunct smart card terminal device **610**. Smart card terminal device **610** is further comprised of a smart card receiving slot **620** and a SAM **630** under the control of processing means. Telephone **600** includes a keypad **640** and may also possess a display (not shown). Keypad **640** and a display, if any, communicate with adjunct smart card terminal device **610** over a data connection **650**. The processing means is capable of receiving input from telephone **600** and displaying output to telephone **600** provided telephone **600** includes display means. Data connection **650** can be hardwired or wireless, such as an IR or RF connection. Data input and output to adjunct device **610** is routed through and may also be displayed on telephone **600**. Alternatively, data input and display means may be located on adjunct device **610** directly.

Moreover, smart card terminal adjunct device **610** can communicate with other smart card terminals over a network that is linked to telephone **600**, or terminal **610** can act as a standalone terminal and effect value transfers between smart cards by itself. Telephone **600** can be a plain old telephone service (POTS) phone, a wireless phone, or an IP phone.

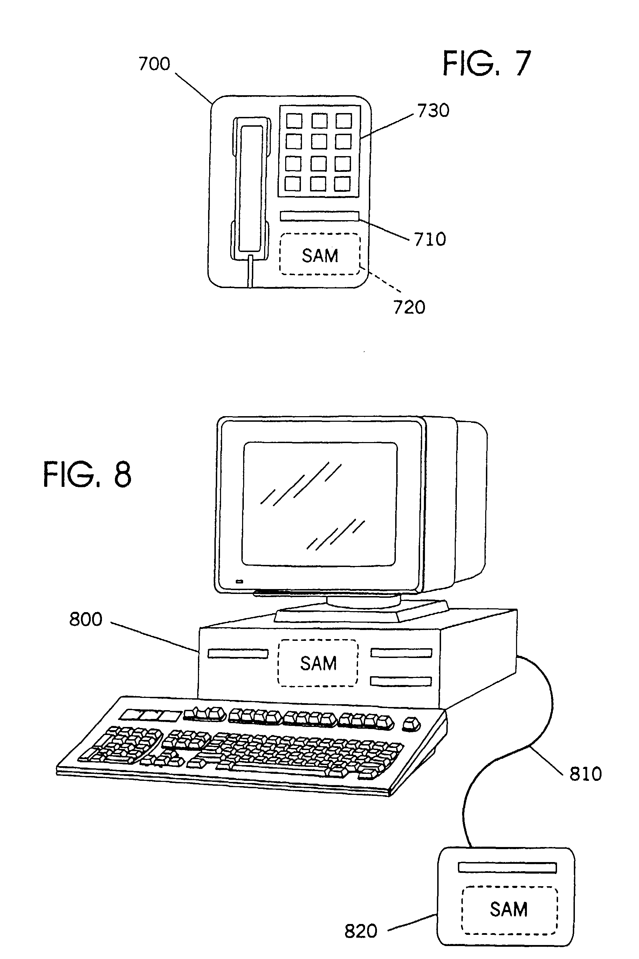

**FIGURE 7** illustrates an integrated telephone/smart card terminal device **700**. This type of smart card terminal includes a smart card receiving slot **710** and SAM **720** built right into telephone **700**. It functions essentially the same as the smart card terminal configuration illustrated in **FIGURE 6**. A keypad **730** is used to assist in local or remote smart card transfers. In addition, a display may or may not be included with the telephone.

**FIGURE 8** illustrates a smart card adjunct device either attached to or integrated in a personal computer (PC). A typical PC **800** can be linked via a connection **810** to a smart card terminal adjunct device **820**. Connection **810** can be wired or wireless. Smart card terminal adjunct device **810** includes a smart card receiving slot **830** and a SAM **840**. If PC **800** includes an integrated smart card terminal then slot **830** would be located on PC **800** and SAM **840** would be within PC **800**. Adjunct device **820** may possess its own processing means or may utilize PC **800** processing means.

Other possible embodiments of smart card terminals include, but are not limited to, adjunct devices linked to PC notebooks, handheld PCs, wireless telephones, or wireless personal assistants such as a Palm Pilot™ from 3Com.

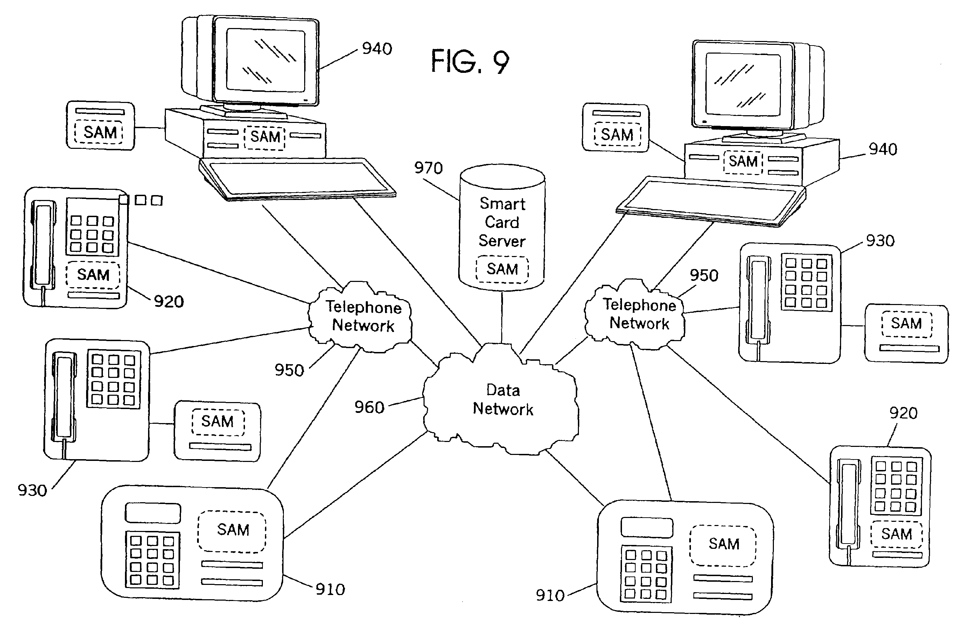

**FIGURE 9** is a diagram illustrating one potential network architecture according to the present invention. A plurality of smart card terminals of various types including self contained smart card terminals **910**, smart telephone smart card terminals **920**, telephone adjunct smart card terminals **930**, and PC adjunct smart card terminals **940** are interconnected via telephone networks **950** and data network **960**. A smart card server **970** is linked to data network **960**. Thus, all of the smart card terminals have access to smart card server **970** either directly or indirectly. The telephone based smart card terminals **920, 930** can communicate with one another over one of the telephone networks **950**. In addition, the telephone networks **950** can also be linked with data network **960**. Self contained smart card terminals **910** and PC based smart card terminals **940** may be directly connected to both telephone network **950** and data network **960**. Thus, any smart card terminal in the network can communicate and transact with any other smart card terminal in the network.

A smart card holder inputs his smart card into any of the illustrated smart card terminals. Each smart card terminal includes a secure applications module (SAM) whose purpose is to provide security/encryption and verify the validity of the inserted smart card as well as resolve data protocol compatabilities. Smart card server **970** is primarily responsible for assisting with certain transactions such as delayed (non real-time) transfers in which value is temporarily stored within smart card server **970** prior to being retrieved at a later date. Real-time transfers are conducted directly between smart card terminals once a connection (preferably secure) is established. If there are protocol differences between two smart card terminals then smart card server **970** becomes involved in the transaction.

The present invention offers many smart card transfer options heretofore unavailable to existing smart cards. For instance, smart card transfers can be effected in a non-real-time basis in addition to the real-time bases already described. A real time transfer implies that smart card value is transferred from one card to another in a single continuous transaction. A non real-time or off-line transfer implies that smart card value is transferred using two separate transactions, a deduction from a first smart card, and a deposit onto a second smart card. Thus, a smart card can have value deducted and stored in a data network for later retrieval. The deducted value can be designated for a specific person or a specific smart card.

In the case of a specific person (non-specific smart card) this can be done by attaching a passcode required to retrieve the stored value from the data network in order to write it onto a second smart card. Of course, that person will have to be notified of the passcode in order to complete the transaction.

Alternatively, in the case of a specific smart card, a unique smart card identifier can be attached to the deducted value stored in the network. The unique identifier will only permit a smart card having the same unique identifier to retrieve the value currently stored on the network. In either case, the holder of the second smart card can retrieve the stored value at a later time.

Moreover, expiration dates can be associated with delayed transfers if desired. For instance, a first smart card holder can leave value for a second smart card holder with a stipulation that the value be retrieved by a certain date or time. If the second smart card holder has not retrieved the value before the expiration date then the value can be returned to the first smart card holder. The return can be automatic the next time the first smart card holder inserts his card into a smart card terminal connected to the data network where the value is being held. Or, the first user can be made to actively retrieve the stored value after the expiration date. The former method would likely require a unique identifier associated with the smart card so the network would know to return or refund the value to that smart card the next time that smart card is inserted into a smart card terminal linked to the network.

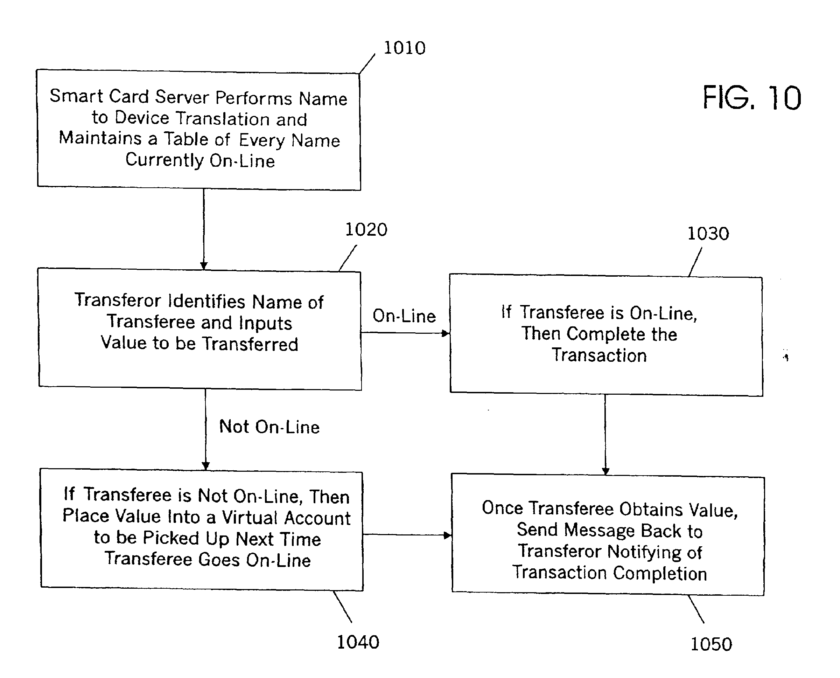

**FIGURE 10** is a flowchart illustrating yet another embodiment of the present invention that would employ the architecture of **FIGURE 9**. In this embodiment, all transactions are routed through the smart card server. The smart card server performs many functions. One function is to perform a name-to-device translation **1010** in which name refers to the name of a smart card holder and device refers to the network address of the smart card terminal that holder is currently using. Whenever a smart card is inserted into a smart card terminal on the network, a message is sent to the smart card server. The message contains the name associated with the smart card and the network address of the smart card terminal. The smart card server then changes the status associated with the name from not on-line (inactive) to on-line (active). All active smart cards are maintained in a data lookup table by the smart card server. The reason for performing name-to-device translations is to allow one smart card holder to send value to another smart card holder just by identifying the name of the smart card holder. The smart card server is responsible for routing the value to the device used by the other smart card holder.

To perform a smart card to smart card value transaction, the donating smart card holder (transferor) inserts his smart card into any smart card terminal on the network. Once a login procedure (optional) has been completed, the transferor inputs the name of the transferee smart card holder and the amount of value to be transferred **1020**. The smart card server initially checks its database to make sure that the name input exists within the system. Next, the smart card server looks up the name on the currently active table of smart cards. If the transferee is on-line **1030**, then the smart card server obtains the network address of the smart card terminal being used by the transferee smart card holder and forwards the value to that smart card terminal.

If the transferee is inactive when the transferor attempts to transfer value, then the smart card server places the value into a virtual account **1040** until the transferee smart card holder inserts his smart card into a smart card terminal on the network. The next time the transferee places his smart card into a smart card terminal he will receive a message that he has value in a virtual account waiting to be added to his smart card. The name of the transferor may also be included with the message. This message is from the smart card server which has compared the names in the virtual account against the names that are currently active. Upon receipt of this message, the transferee selects an option to receive the value from the virtual account. Alternatively, the smart card server will automatically transfer the value from the virtual account to the transferee's smart card upon its insertion into a smart card terminal.

Once the value is received by the transferee, a message is sent from the smart card server to the transferor indicating that the value transfer transaction has completed **1050**. This message may also include a time stamp of when the transaction was complete.

The transferor can maintain revocation control over a transaction. If the transferee was inactive when the transferor initiated the transaction the value was placed into a virtual account. The transferor can check the status of the transaction at any time by inserting his smart card into a smart card terminal on the network. Upon the transferor going active, the smart card server would notify him of all pending transactions involving his name, both as a sender and as a receiver. If the transferor wished to cancel a transfer he could do so unilaterally. Moreover, a transferor could set an expiration date in which the transferor must obtain the value. The expiration date would be included with the original transfer. If the expiration date passed without the transferee obtaining the value, the value would be returned to the transferor by moving it from the transferee's virtual account to the transferor's virtual account.

The present invention has been described, in part, with reference to flowchart illustrations of methods. It will be understood that each block of the flowchart illustrations, and combinations of blocks in the flowchart illustrations, can be implemented by computer program instructions. These computer program instructions may be loaded onto a general purpose computer, special purpose computer, or other programmable data processing apparatus to produce a machine including a smart card terminal or smart card terminal adjunct device, such that the instructions which execute on the computer or other programmable data processing apparatus create means for implementing the functions specified in the flowchart block or blocks. These computer program instructions may also be stored in a computer-readable memory that can direct a computer or other programmable data processing apparatus to function in a particular manner, such that the instructions stored in the computer-readable memory produce an article of manufacture including instruction means which implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions specified in the flowchart block or blocks.

Accordingly, blocks of flowchart illustrations support combinations of means for performing the specified functions, combinations of steps for performing the specified functions and program instruction means for performing the specified functions. It will also be understood that each block of flowchart illustrations, and combinations of blocks in flowchart illustrations, can be implemented by special purpose hardware-based computer systems which perform the specified functions or steps, or combinations of special purpose hardware and computer instructions.

In the claims, means-plus-function clauses are intended to cover the structures described herein as performing the recited function and not only structural equivalents but also equivalent structures. Therefore, it is to be understood that the foregoing is illustrative of the present invention and is not to be construed as limited to the specific embodiments disclosed, and that modifications to the disclosed embodiments, as well as other embodiments, are intended to be included within the scope of the appended claims. The invention is defined by the following claims, with equivalents of the claims to be included therein.

## Claims

1. A smart card terminal for transferring value between smart cards comprising:
a smart card reader for establishing an operable connection between a smart card and the smart card terminal; and
processing means for deducting value from and adding value to a smart card,
wherein
a first smart card is input into said smart card reader and a value is deducted from said first smart card, followed by a second smart card inserted into said smart card reader and the value deducted from said first smart card is added to said second smart card.

2. The smart card terminal of claim 1 wherein said processing means includes security means for validating a smart card and encrypting data.

3. The smart card terminal of claim 1 or 2 further comprising input means for allowing a smart card holder to key in data including the value to be transferred between smart cards.

4. The smart card terminal of claim 3 wherein said input means is a numeric keypad.

5. The smart card terminal of claim 3 wherein said input means is a touchscreen.

6. The smart card terminal of any preceding claim further comprising display means for displaying data pertaining to a smart card transaction.

7. The smart card terminal of any preceding claim further comprising communication means for establishing a connection with other smart card terminals for the purpose of performing value transfers between smart cards in which each smart card uses a different smart card terminal.

8. A method for transferring value between smart cards comprising:
receiving a first smart card into receiving means on a smart card terminal;
deducting a value from said first smart card;
receiving a second smart card into said receiving means; and
adding the deducted value to said second smart card.

9. A method for transferring value between smart cards comprising:
receiving a first smart card into a first receiving means on a smart card terminal;
deducting a value from said first smart card;
receiving a second smart card into a second receiving means on said smart card terminal; and
adding the deducted value to said second smart card.

10. A method for transferring value between smart cards comprising:
receiving a first smart card into a receiving means on a first smart card terminal;
receiving a second smart card into a receiving means on a second smart card terminal;
establishing a connection between said first and second smart card terminals;
deducting a value from said first smart card;
transmitting the deducted value from said first smart card terminal to said second smart card terminal; and
adding the deducted value to said second smart card.

11. A combination telephone and smart card terminal comprising:
a telephone connectable to a telephone network; and
a smart card terminal integrated into said telephone,
wherein said smart card terminal accepts at least one smart card in order to exchange data and value stored on the smart card with the telephone network.

12. The combination telephone and smart card terminal of claim 11 wherein the telephone is a plain old telephone service (POTS) telephone connectable to the PSTN.

13. The combination telephone and smart card terminal of claim 11 wherein the telephone is a wireless telephone connectable to a wireless telephone network.

14. The combination telephone and smart card terminal of claim 11 wherein the telephone is an IP telephone connectable to an IP telephone network.

15. A combination computer and smart card terminal comprising:
a computer connectable to a data network; and
a smart card terminal integrated into said computer,
wherein said smart card terminal accepts at least one smart card in order to exchange data and value stored on the smart card with the data network.

16. The combination computer and smart card terminal of claim 15 wherein the computer is connectable to a packet data network.

17. A smart card server connected to a network of smart card terminals, said smart card server for managing smart card to smart card value transactions, said smart card server comprising:
means for receiving a name associated with a smart card upon a smart card being inserted into a smart card terminal on the network;
means for receiving a network address associated with a smart card terminal upon a smart card being inserted into said smart card terminal;
database means for maintaining a look up table linking smart card names and smart card terminal network addresses of all active smart cards, wherein an active smart card is one that is currently in use at a smart card terminal on the network;
means for establishing and maintaining a virtual account for holding value, said virtual account associated with a smart card name;
wherein
when a first smart card is inserted into a smart card terminal and value is attempted to be transferred to a second smart card by identifying the name associated with the second smart, said smart card server looks up the name associated with the second smart card via the data look up table in order to determine if the second smart card is active on the network.

18. The smart card server of claim 17 wherein if the second smart card is currently active on the network, said smart card server transfers the value to the network address of the smart card terminal the second smart card is currently active on.

19. The smart card server of claim 17 or 18 wherein if the second smart card is not currently active on the network, said smart card server places the value into a virtual account in the name associated with the second smart card.

20. The smart card server of claim 19 wherein said smart card server notifies the second smart card of its virtual account value upon said second smart card going active on the network.

21. The smart card server of claim 19 or 20 wherein the first smart card can reclaim the value in a virtual account associated with the name of the second smart card.

22. The smart card server of claim 21 wherein the first smart card can set an expiration date for the second smart card to claim the value in a virtual account associated with the name of the second smart card.

23. The smart card server of claim 22 wherein upon passing of the expiration date the value in the virtual account associated with the name of the second smart card is placed into a virtual account in the name associated with the first smart card.

24. A computer program product executing in a smart card server that is connected to a network of smart card terminals, said computer program product for managing smart card to smart card value transactions comprising:
computer program code for receiving a name associated with a smart card upon a smart card being inserted into a smart card terminal on the network;
computer program code for receiving a network address associated with a smart card terminal upon a smart card being inserted into said smart card terminal;
computer program code for maintaining a look up table linking smart card names and smart card terminal network addresses of all active smart cards, wherein an active smart card is one that is currently in use at a smart card terminal on the network;
computer program code for establishing and maintaining a virtual account for holding value, said virtual account associated with a smart card name;
wherein
when a first smart card is inserted into a smart card terminal and value is attempted to be transferred to a second smart card by identifying the name associated with the second smart, said computer program code looks up the name associated with the second smart card via the data look up table in order to determine if the second smart card is active on the network.

25. The computer program product of claim 24 wherein if the second smart card is currently active on the network, said computer program code causes the value to be transferred to the network address of the smart card terminal the second smart card is currently active on.

26. The computer program product of claim 24 or 25 wherein if the second smart card is not currently active on the network, said computer program code causes the value to be placed into a virtual account in the name associated with the second smart card.

27. The computer program product of claim 26 wherein said computer program code causes the second smart card to be notified of its virtual account value upon said second smart card going active on the network.
